# EUROPEAN PATENT APPLICATION

(11) **EP 1 549 092 A1**
(43) Date of publication of application: **29.06.2005**
(21) Application number: 03293286.5
(22) Date of filing: 22.12.2003
(51) Int. Cl.: H04Q 7/34

(54) **Wireless data traffic statistics**

(71) Applicant: Nortel Networks Limited, St. Laurent, Quebec H4S 2A9 (CA)
(72) Inventor: Eisenmann, Pierre, 75013 Paris (FR); Anderson, David, Calgary Alberta T3A 6E6 (CA)
(74) Representative: Bird, William Edward

(57) **Abstract**

A trace, representative of data traffic on a wireless communications network, is gathered and analysed. Packets belonging to a particular data session and end-user are identified. Time between packet arrivals in a session is determined. A threshold value, representing a time between packet arrivals, is set. 'ON' periods of activity and 'OFF' periods of inactivity are determined, with consecutive packets arriving within the threshold value of time being grouped into a common 'ON' period of activity. This method characterizes data traffic with limited, easily obtainable information. The threshold value can be set to different values to highlight different network performance issues. The results of the analysis can be used to synthesise traffic for use in a network simulator.

## Description

### FIELD OF THE INVENTION

This invention relates to a method, software and apparatus for analysing data traffic, especially wireless data traffic within a telecommunications network especially wireless telecommunications network.

### BACKGROUND TO THE INVENTION

Wireless cellular communications systems are widely deployed. Such systems carry a mixture of traditional voice traffic and data traffic. Data traffic can result from a variety of sources including end-users making use of Wireless Application Protocol (WAP) applications, internet surfing and email, e.g. when using a laptop or personal computer with a mobile phone or datacard or when using a mobile phone with Wireless Internet capabilities, e.g. configured for WAP services.

Network operators need to ensure that their network can handle the demands made by users. Mathematical models have been proposed to model traffic in various networks, such as the Internet. Some examples are described in the papers "Internet traffic tends towards Poisson and Independent as the Load Increases", Jin Cao et al, Non-linera Estimation and Classification, Eds. C. Holmes, D. Denison, M. Hansen? B. Yu, and B. Mallick, Springer 2002, and "A Multiservice User Descriptive Traffic Source Model", Militades E. Anagnostou et al. IEEE Trans. on Comms. Vol. 44, 10 October 1996. While mathematical models can adequately model normal traffic, they cannot always model the kind of unpredictable behaviour that occurs in an actual network.

Network operators also have a need to monitor actual performance of their network so that problems can be identified and resolved as soon as possible. This requires some form of analysis in real-time, or as near to real-time as possible, based on real traffic. Simple network packet counters can provide limited statistics, such as the volume of packets passing through the network. More detailed statistical information can require access to information within the headers of data packets themselves. It is known to sample or "sniff' the traffic flowing along a network over a period of time and to analyse this to obtain statistics. Examples of such systems, for Internet traffic, are described in the paper "S-Net: A Software system for Analysing Packet Header Databases", Jin Cao et al. Bell Labs. Analysing vast quantities of actual traffic in this way requires considerable computational resources. As a result, it is difficult to implement real-time monitoring of a network.

### SUMMARY OF THE INVENTION

An object of the present invention is to provide a method and apparatus for simplifying monitoring of traffic on a wireless network.

A first aspect of the present invention provides method of analysing data traffic in a telecommunications network especially a wireless communications network in which user terminals perform data sessions, which each comprise an unknown number of data unit downloads, each data unit comprising an unknown number of data packets, each data unit being separated by an unknown time interval , the method comprising:
receiving a trace representative of the traffic on the network;
separating from this trace the traffic of each user terminal i.e. each session and for each session:
determining time between packet arrivals in a session;
setting a threshold value representing a time between packet arrivals;
determining 'ON' periods of activity and 'OFF' periods of inactivity and wherein consecutive packets arriving within the threshold value of time are grouped into a common 'ON' period of activity. The data flows can be separated according to the destination IP address, for example is a wireless network is the IP address can be taken as the mobile unit ID. An output of the method can be statistics on the data flow within the network, e.g. in the form of a one or more dimensional histogram.

The data traffic may be accessed by a so-called "sniffer". Packets of a given element (e.g. internet page, email) may be separated by a significant time interval. The purpose of the threshold is to aggregate IP packets so that a given group of packets belonging to the same downloaded element are grouped together to form a single ON period. The use of the threshold value avoids the need for further inspection of packet header contents. This method has an advantage of being relatively simple to implement and does not need to resort to detailed analysis of the content of packets, other than very limited header information. Generally headers are not encrypted so that header information is accessible without decryption. Because the method is relatively simple, it can be implemented in real-time, or substantially real-time. This allows it to be usefully used for network monitoring purposes. The invention can also be applied to offline traces of network traffic.

The functionality described here can be implemented in software, hardware or a combination of these. Accordingly, another aspect of the invention provides software for implementing the method. The software may be stored on an electronic memory device, hard disk, optical disk or other machine-readable storage medium. The software may be delivered as a computer program product on a machine-readable carrier or it may be downloaded via a network.

Although an embodiment of the invention is described with respect to a wireless cellular network, the invention is applicable to other forms of wireless network, such as Wireless Wide Area Networks (WWAN) and Local Area Networks. Similarly, it is applicable to second generation systems such as those based on GSM, and to third generation systems such as UMTS.

### BRIEF DESCRIPTION OF THE DRAWINGS

Embodiments of the invention will be described with reference to the accompanying drawings in which:
Figure 1 shows a wireless network for carrying data traffic in accordance with an embodiment of the present invention;
Figure 2 shows a typical stream of data packets representing traffic to a user terminal in the network of Figure 1;
Figure 3 is a flow chart of a processing method in accordance with an embodiment of the invention;
Figure 4 shows characterization of the traffic of Figure 2;
Figure 5 shows the causes of delay in the network of Figure 1;
Figure 6 shows the main functional blocks in an analysing apparatus in accordance with the invention;

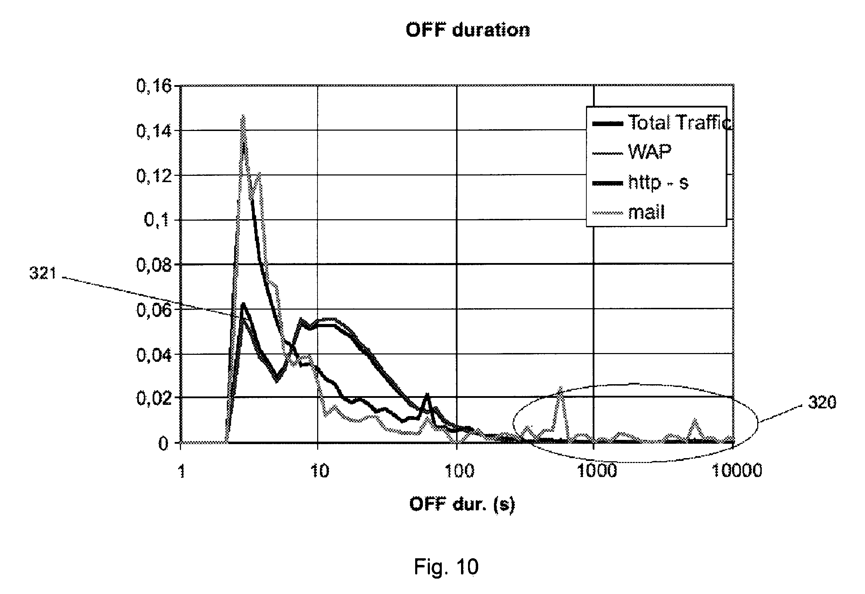

Figures 7 to 10 show results of the analysis; and
Figure 11 shows a trace as part of a user interface for the analyzing apparatus of Figure 6.
Figure 12 shows an output in accordance with an embodiment of the present invention in which an unusual activity in WAP services is detected..

### DESCRIPTION OF PREFERRED EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The present invention relates to telecommunications networks in general. In the following reference will be made to wireless networks as one example of how the invention may be implemented but the present invention is not limited thereto. The present invention may be used on any data network, e.g. wireline, fibre optic cable, coax, twisted pair, wireless - either radio or optical, e.g. infra-red, etc.

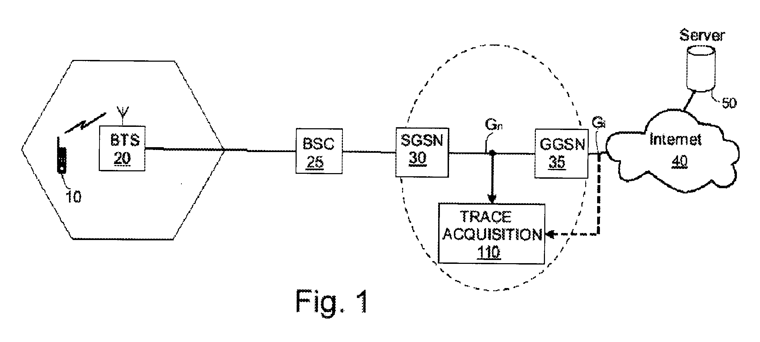

Figure 1 shows a typical wireless cellular network which is capable of carrying data traffic. The wireless cellular network may be any suitable network which can carry data. The present invention relates to wireless telecommunications networks especially mobile cellular telephone systems e.g. wideband or narrow band, such as a WideBand CDMA, UMTS, GSM and GPRS, IS 95 or IS-136 public mobile telephone network, a private radio Local Area Network, such as a HIPERLAN /1 or /2 network in a hotel lounge, a private personal radio network such as a BlueToooth local access network which may be connected to a Local Area Network e.g. in supermarket, a railway station or an airport. Information on GSM systems can be found in the book "The GSM System of Mobile Communications", by Mouly and Pautet, Cell & Sys, 1992. Information on the IS-936 system can be found in the book "IS-136 TDMA Technology, Economics and Services", by Harte, Smith, Jacobs, Artech House, 1998. Information on the IS-95 system can be found in the books "CDMA Systems Engineering Handbook", Lee and Miller, Artech House, 1998 and "CDMA for Wireless Personal Communications", Prasad, Artech House, 1996. Information on wideband CDMA such as UMTS systems may be found in the books "WCDMA for UMTS", by Holma and Toskala, Wiley, 2001 and "Wideband CDMA for third generation mobile communications", Ojanperä and Prasad, Artech House, 1998. Particularly spread spectrum systems, especially direct sequence spread spectrum systems, whether wide band or narrow band, such as CDMA networks, for example UMTS or IS-95 or CDMA2000, can be operated in accordance with the present invention. The design and construction of Wireless LAN's is discussed in detail in, for example, "Wireless LAN's" by Jim Geier, Macmillan Technical Publishing, 1999. OFDM systems are described in "OFDM for wireless multimedia communications", R. Van Nee and R. Prasad, Artech House, 2000. Any of the networks may be cellular networks.

The terms terminal or user terminal or mobile unit should be interpreted in a broad sense and may include any suitable user equipment whether stationary or mobile such as, mobile telephones, smart phones, PDA's or laptops with mobile termination, or for example, portable, pocket, hand-held, computer-included, or car-mounted mobile devices which communicate via voice and/or data/multimedia. The term "user" will be taken to include the terminal used by the user.

In the following reference will be made to the GPRS extension of the European GSM network, but as indicated above the present invention is not limited thereto. Referring to Figure 1, wireless terminal 10, such a mobile handset, personal digital assistant (PDA) or computer, is in wireless communication with a base station BTS 20. Data can be carried over the air interface between the terminal 10 and BTS 20 as high speed circuit switched data (HSCSD) or, more commonly, using the General Packet Radio Service (GPRS). The GPRS service may be a standard service or a GPRS/EDGE service (Enhanced Data Rates for GSM Evolution). These techniques are well known to those skilled in the art. The labels 'BTS' and 'BSC' are terms generally used in second generation networks such as those based on GSM. In third generation networks such as UMTS the BTS is referred to as 'Node B' and the BSC is referred to as a Radio Network Controller (RNC). BSC 25 is connected to a Serving GPRS Support Node (SGSN) 30. The SGSN 30 is connected to similar SGSNs and to a Gateway GPRS Support Node (GGSN) 35. The GGSN acts as a gateway to external networks, such as the internet 40. One external server 50 is shown connected to a packet based wide area network (WAN) such as the Internet 40 although it will be appreciated that many such servers exist. End-users each use the network in a different manner. Some of the main uses of the network are: email access, Wireless Application Protocol (WAP) sessions and HTTP traffic for internet surfing.

Figure 1 also shows a trace acquisition unit 110 connected to the traffic path. Unit 110 is capable of recording a 'trace' of traffic passing along the particular part of the network that it is positioned and is often called a "sniffer". It is shown connected at the Gn interface, between the SGSN and GGSN, although it can be positioned at other points in the network, such as the Gi interface between the GGSN and an external network. At these interfaces there is a high flow of data traffic and so it is possible to gather information more quickly. This causes statistics of monitored traffic to converge faster. Trace can be taken on any interface in principle. Depending on needs and conditions, traces can be typically taken on Gn (IP traffic within GTP tunnel) or Gi (plain IP traffic but mobile IP address possibly hidden by usage of NAT) or Gb, the trace analyser being able to retrieve the IP information which is encapsulated in the GPRS protocol layers.

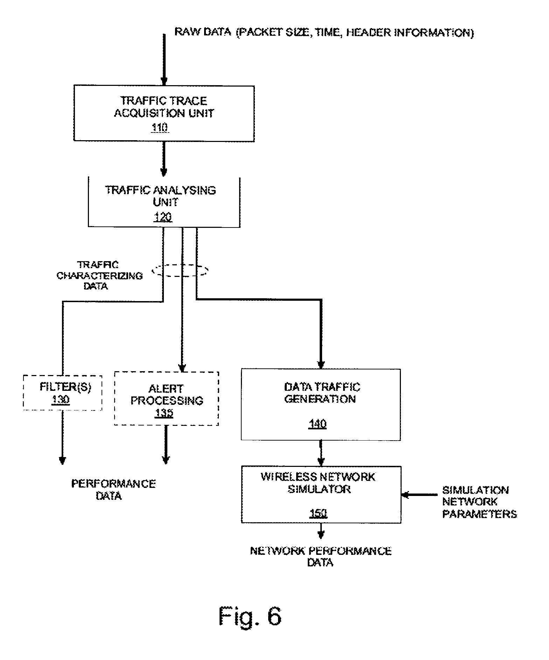

The present invention includes monitoring data flow in both directions but, in order to minimise the amount of data processing, it is preferred to monitor the data traffic in only one direction. The downlink direction (server 50 to terminal 10) is preferred as this is the direction for which network performance is most critical. The trace information is preferably analysed to derive data which characterizes the traffic and which can be used in network management, network planning, cell management or cell planning, deployment planning, etc. A traffic analysing unit (120, Fig. 6) can be located alongside the trace acquisition unit 110 or remotely from the trace acquisition unit 110 and be connected to it by a communication link. The analysing unit 120 can operate in real-time, or near-real-time, or it can be used to analyse previously acquired trace information which has been saved as a file on a server. Trace acquisition unit 110 and/or traffic analysing unit 120 may possibly reside within a network element e.g. GGSN or SGSN or any equipment on the end-to-end data path.

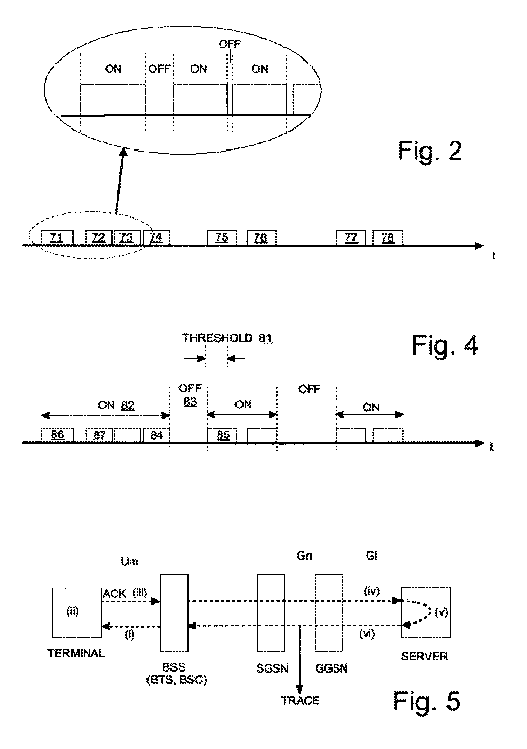

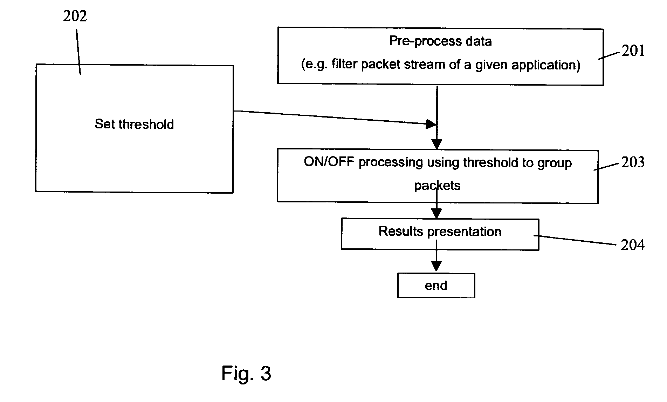

Figure 2 shows a sequence of data packets 71-78 representing a data session over a period of time. For clarity, the drawing is not shown to scale (i.e. the time period between packets is shown much shorter than it would normally be). An end-user's use of the network is divided into data sessions. Each session corresponds to the series of interactions the end-user makes for a given application. For example, if the end-user logs on to the network and surfs 10 WAP pages, the WAP session will correspond to this period. Each data session comprises ON/OFF traffic, where an ON period is a flow of one or more packets which carry the information element(s), such as a page downloaded by a user, and an OFF period corresponds to the reading time of this element, i.e. the idle time before the next ON which will typically be the next page clicked by the end-user. The traffic analysing unit (120, Figure 6) analyses the information received from the trace acquisition unit 110 to derive some useful information for a network operator. One way of analysing the traffic is to derive session statistics, i.e.: the number of ON periods per session, the amount of data downloaded in each ON period (i.e. the combined size of the packets, in bytes during an ON period); duration of OFF periods (in second) and the sessions arrival rate. The distribution of this information, as well as the average values, are useful.

A first method of processing trace information will now be described with reference to the flow chart of Figure 3 and the schematic diagram of Figure 6. The trace information obtained from the network includes, for each packet, the time of arrival of the packet, the size of the packet, and certain information from the header of the packet, such as destination IP address and UDP/TCP port number. The analysis can be performed after specific filtering of the data which is being analysed. This specifc filtering may be content related or network related, e.g. address related. For instance it may focus on the ON/OFF characteristic of the WAP traffic only, hence only IP packets bearing WAP traffic will be analysed. A possible implementation of the filter consists in analysing the UDP/TCP port number and selecting only the IP packets with the relevant port numbers for WAP. Another possible implementation consists in having a content analysis filter able to identify e.g. WAP traffic in the IP packet regardless of the port information by analysing the payload of the IP packet. The former is fast and convenient and relies on the header information. The latter is more complex but it allows better robustness in the event when false port numbers are used e.g. by hackers. It will be appreciated that the raw data includes packets relating to many different end-users. A first step, 201, of the method pre-processes the raw data to identify the user and the session. One example of pre-processing is as follows. The end-user of the session can be identified by the destination IP address, and the application can be identified by the UDP or TCP port number. As an alternative, the application can be derived through semantic analysis at a higher layer as indicated above.. The preprocessing step identifies, for each packet, that it belongs to session j of end-user i. The user may be a new or existing user. Similarly, the session may be a new session or a continuation of an existing session. Filtering of the data may be performed in this step.

In the next step 202 a threshold value is set according to criteria like the application to be analysed, network characteristics, purpose of analysis. In step 203 the ON/OFF processing is performed. The threshold value, representing a time period, is used during the ON/OFF processing. The significance of this threshold value will be discussed more fully below.

For each user, let T(i) be the time of arrival (i.e. of capture) of the last IP packet of this session (i.e. its timestamp), let N(i) be the number of ON periods already completed on this session, let S(i) be the size of the last ON period. Let's assume that at time T an IP packet of size S arrives for user i.

If T-T(i) > threshold value then:
- the current packet is the first one of a new ON period;
- the final size of the previous ON period is S(i)
- the OFF period number (i-1) is equal to T-T(i);
- i = i+1, i.e. the number of ON periods of this session is increased by 1.
In summary, the current packet follows the previous packet by a period which is greater than the threshold value and is deemed to belong to the downloading of a different element. In Figure 4, packets 84 and 85, which are separated by an OFF period 83 which is greater than the threshold period 81, will be characterized in this manner.

If T-T(i) < threshold value then:
- the packet belongs to the current ON period;
- S(i) = S(i) + S
In summary, the current packet follows the previous packet by a period which is less than the threshold value and so is deemed to belong to the downloading of the same element. In Figure 4, packets 86 and 87, which are separated by a short OFF period which is less than the threshold period 81, will be characterized in this manner.

IP packets of a given element (e.g. internet page, email) may be separated by a significant time interval. The purpose of the threshold is to concatenate IP packets so that a given group of packets belonging to the same downloaded element are grouped together to form a single ON period. The use of the threshold value avoids the need for further inspection of packet header contents. The threshold value may be set to any value as required by the analysis purpose and may be varied during an analysis period in order to obtain different statistical information depending upon the threshold value.

The causes of IP packet separation will now be discussed.

### TCP slow start.

'Slow start' is a known part of the TCP protocol. As a congestion avoidance measure, at the beginning of a new TCP connection a server first sends a single packet and waits until it receives an acknowledgement message ACK from the end-user's terminal. The server then continues by sending two packets and so on. The longest idle time is after the first packet. Referring to Figure 5, assuming that a traffic trace is acquired on the Gn interface, the idle time has a value which is approximately the sum of the following events: (i) transit time of the IP packet on the air interface downlink, (ii) processing of the IP packet by the mobile which generates a TCP ACK message, (iii) transit time of the TCP ACK message on the air interface uplink, (iv) transit time over the Gi interface cloud up to the server 50, (v) server processing time, (vi) transit time of the subsequent IP packet on the Gi interface, from server 50 to GGSN, to the monitor apparatus 50. The total duration is driven by the radio network procedures and architecture in terms (i) and (iii) and by the quality of the Gi cloud and the server load in terms (iv-vi). It is typically of the order of 1 second. In the following it will be called Trtt. WAP version 1 traffic is sent over UDP and thus this section does not apply to such traffic.

For the subsequent phases of the slow-start procedure, the idle time will be less since the TCP server anticipates the reception of ACK messages by sending a window of IP packets.

If a TCP performance-enhancing proxy (PEP) has been deployed these idle times should not be present. Although it is recommended that TCP-PEPs are deployed in a network, this may not be the case.

### Uplink establishment time

Assume the downlink transfer of a large file. After a TCP slow-start, the sending of downlink IP packets will be delayed by the uplink channel establishment time. This is because uplink TCP ACK messages accumulate in the user terminal's buffer until the uplink radio channel is established. Once the channel is established, the messages are all sent and the channel is closed. They trigger the sending of a corresponding amount of downlink IP packets by the TCP server and these packets are very closely grouped in time. The next group of downlink IP packets will occur after the uplink establishment time, noted T_{ul.} Tᵤₗ is smaller than Trtt above since it is included in (i) above.

### Several elements in a page

A web or WAP page generally consists of a list of embedded elements. After the user clicks on the page link, the browser sends an HTTP GET request. The browser receives the page body listing all of the elements. It then triggers an automatic sequence of GET requests by the browser until all the page elements have been received. Depending on which HTTP options have been used, this may generate idle times between each element of the page (if pipelining is not used for instance). Thus, the idle time is equal to the browser's reaction time (Throws) added to Trtt.

In view of the above factors, taking the threshold value = Trtt = Tbrows + margin, and assuming that the threshold is smaller than the smallest OFF period, all of the IP packets belonging to a given element will always correctly be aggregated. The main factor which will prevent this being true are strong performance issues in the end-to-end chain, particularly on the Gi cloud and the server 50. Since typical upper bounds are Tᵣₜₜ < 1.4s and T_{brows} < 1 and OFF > 4s, threshold values of about 2.5 seconds are good in general. With a threshold in the region of 2.5s, the ON/OFF statistics are robust. If the threshold is too small, a sequence of packets representing a single page are decomposed into separate ON periods and the TCP slow start procedure creates false ON periods. If the threshold is too large, sequences of packets representing different elements are erroneously aggregated into the same ON period. Note that the preceding section is a typical example of application of the analysis in accordance with the present invention. For other investigation purposes, or with other network conditions or applications, the threshold value may be different.

A typical output of the analysis (step 204 in Fig. 3) consists in the production of the distribution of ON and OFF statistics where all the session informations are merged to produce the relevant statistics. The statistics plotted gives an activity spectrum which will usually show peaks at values which correspond to particular network related times. For example, having identified the ON and OFF periods of each session and their number, their distribution is computed and presented in an appropriate form at step 205. This can be a graphical form (e.g. a histogram for each of these variables) or tabular form, or by fitting an approximate parametric model to the results. This can be done in real-time by adaptive parameter estimation methods. The results provide full information on end-user traffic. Varying the threshold value may be viewed as being similar to varying the resolution of the spectrum analysis. A small threshold highlights small time-interval phenomena and dis-aggregates other data, a large threshold aggregates small time-interval phenomena and highlights larger timescale effects. Depending on the purpose, specific threshold values may be relevant to specific valuable information about the operation of the network.

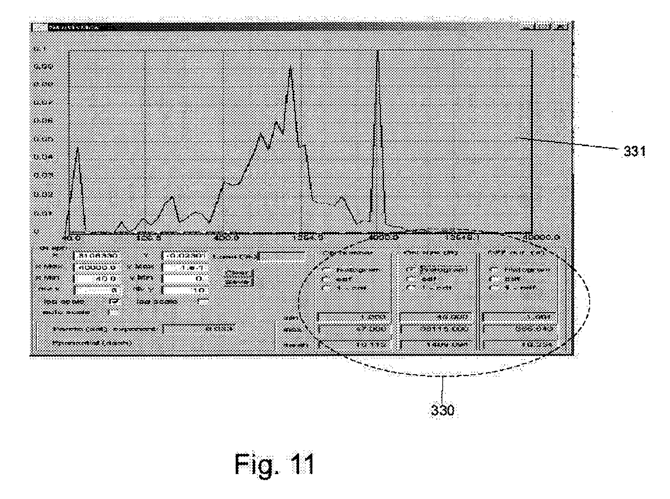

Figure 11 shows an example user interface for the results. In region 330, parameters can be set to view the number of ON periods, the size of ON periods (in bytes) and OFF duration (in seconds) and to select how the results are presented. Region 331 of the interface shows the selected results, in this case the size of ON periods (in bytes) for WAP traffic.

As indicated above it is possible to set the threshold to a value which characterizes the data traffic in a desired manner. Alternatively, the threshold can be set to a range of values. Typically the threshold will be fixed and a few threshold values will be tried. It is also possible to automatically generate different analyses with different threshold values. Then preferably, the threshold is stepped through a range of values. The values need not be equally spaced in time, but can be a set of values which are indicative of a particular type of network behaviour. Referring again to Figure 3, the threshold can be initially set, at step 202, to a value at a first end of the range of threshold values. The threshold value is fixed and can possibly be changed for a few different values. A parameter defining how samples are aggregated in bins of a statistical analysis, e.g. a one dimensional or multi-dimensional histogram, can be the time interval between samples for the graphics representation. On/off processing is performed, at step 203, based on that threshold value. When on/off processing is complete, the threshold may be changed, at step 202and on/off processing may be repeated based on the new value. It is preferred that the range of threshold values are applied to the same set of data obtained from the network.

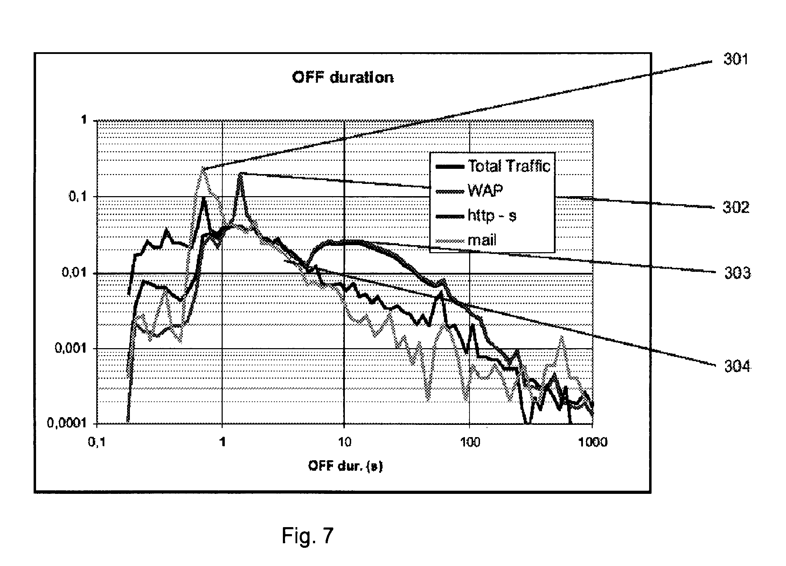

As described above, different threshold values provide different network performance information. Setting the threshold = 0 presents each packet as a separate 'ON' period and removes the packet grouping effects of the threshold. This provides a wealth of information on network performance. Figure 7 shows a graph of 'OFF' duration (horizontal axis) and number of occurrences (normalised, vertical axis) with the threshold value set to zero. The peaks are indicative of traffic and network performance. Peak 301 represents uplink establishment time, which is observable during long downloads having several packets per page; peak 302 represents round trip network delay; peak 303 represents WAP reading time, i.e. the time that an end-user takes to read a page before selecting another and region 304 implies a lot of automatic requests for mail as there is not a significant reading time. It is possible, for example; to determine the provider of network equipment and their performance issues from the results as the equipment leaves a performance signature which can be determined by the methods of the present invention. The full round-trip time through the network can be derived from a peak in the OFF spectrum since, for certain applications, the server stops sending at some point until an acknowledgement is received.

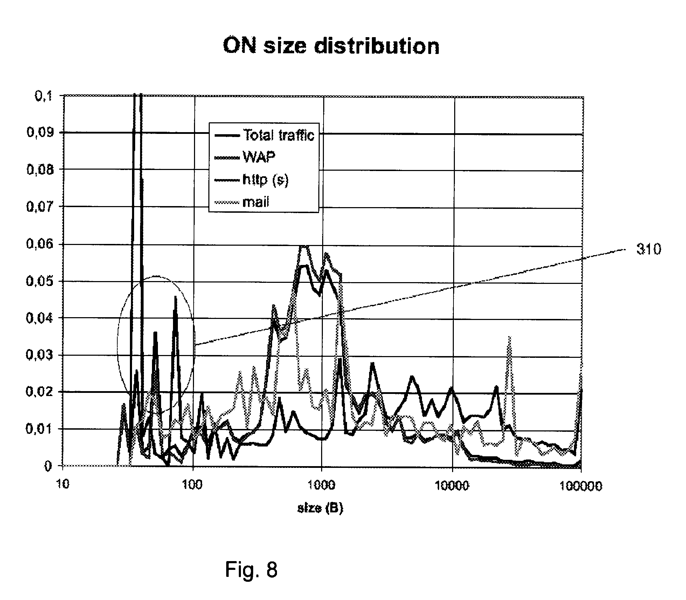

Figure 8 shows analysis results taken during a period of heavy (full) network traffic. This analysis is performed using a threshold value of 2.5 seconds. The purpose here is to obtain realistic information on the size of the information elements. Such a threshold value allows to aggregate packets that have been separated in time by effects like TCP slow-start or by non-pipelined http requests for the download of a composite page. Region 310 shows signalling traffic due to uplink traffic. The analysis is performed on the downlink traffic only and the downlink flow of TCP ACK's which acknowledge the reception of uplink data can be seen. Their size is constant and well-known and clearly brought out.

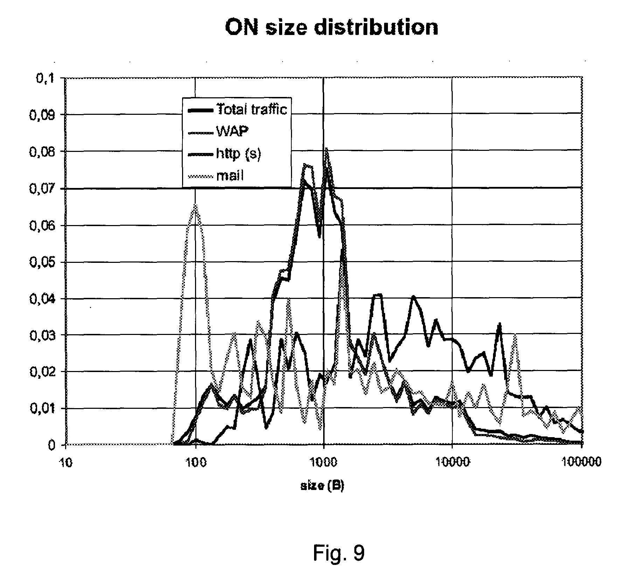

Figure 9 is similar except that ON elements of a size lower than a value equal to the size of TCP ACKs are removed. It allows to extract only the downlink data flow (under the approximation that the TCP packets of size below the threshold consist only only of TCP ACKs). Note here that other processing (like appropriate filtering in the pre-processing phase) is anoter way to remove TCP ACK's from the analysis. It is more accurate but may be more complicated to do.

Figure 9 shows OFF duration for downlink only traffic, with a low peak 321 due to consecutive downloads. Region 320 shows a period of several minutes between email receptions.

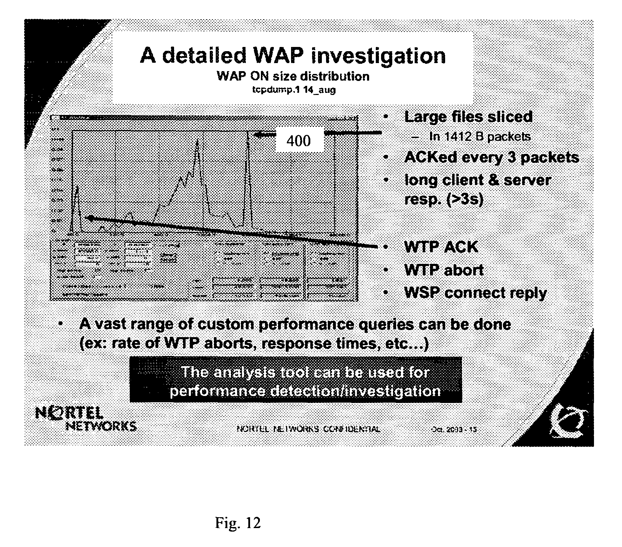

The processing method described above permits an efficient, very rapid characterizing of the call profile which can be performed in real-time, if required. The outputs from analysing apparatus 120 can be used to raise performance alerts. An alert processing function 135 can monitor properties of the characterizing data, comparing them with thresholds indicative of abnormal behaviour or behaviour which requires remedial action. The outputs of the monitoring apparatus 40 can also be filtered 130 in fact the filter is performed before the ON/OFF analysis (see figure 3, step 201) in various ways to highlight particular types of network behaviour or performance, e.g. to show only WAP, HTTP or email traffic. Additional filters can be applied, e.g. based on the accessed URL, e.g. adult content. An additional application consists in a fingerprint analysis. On a given network, in good conditions, it may be observed that the ON or OFF spectra for a given application have a relatively constant shape. This shape is archived as a reference curve. By comparing the observed spectral shapes with the reference curve (for instance by a least square deviation estimate or possibly by a max deviation analysis) an alarm maybe raised when the observed shape is significantly different to the reference curve. As an example, figure 12 shows an abnormal WAP performance issue detected thanks to the peak 400 on the right-hand half of the graph.

Referring again to Figure 6, the outputs of the analysing apparatus 120 can be used as the basis of data for network simulation and performance testing. Outputs of the analysing unit 120 are applied to a traffic generation simulator 140. The traffic simulator generates traffic in a random manner such that the traffic is constrained to have identical, or very similar, statistical properties to that defined by the outputs of the analysing unit 120. The simulated traffic is then applied to a software-based wireless network simulator, e.g. GPRS simulator, in which it is possible to define a wireless network that can be tested. By testing a simulated network using simulated traffic which has the same spectrum as 'real' traffic as determined in accordance with the present invention it is possible to check reliably whether the network elements (base station, routers, interconnecting links) are correctly dimensioned to handle the expected traffic. This can be done without having to input the complete traffic from a real installation and without having to make theoretical estimates of the traffic. Thus the stored data in accordance with the present invention provides a convenient and compact method of inputting realistic traffic data into a simulator. For example, it is also possible to run scenarios which alter the network capacity or traffic and to observe the effects. This allows changes to operating parameters of the network, changes to hardware used in the network, changes to cell operating parameters, to cell hardware, etc. Accordingly, a very efficient GPRS simulator takes as input the synthetic data collected in real-time by the method described above in accordance with the present invention. It is able to produce quality indicators for end-user traffic based on assumptions of the traffic (provided by the trace taking tool and the invention) and on the capacity (typically the number of radio resources on a typical cell). If these indicators show bad quality issues, an alert is generated.

For real-time monitoring, a real-time estimation of the traffic distribution parameter can be done. In other words, the main outputs of the analysis could be provided in a synthetic form in real-time after application of appropriate estimation and filtering methods. For instance the real-time system may only provide the estimated average OFF period or ON size, or other parametric information allowing to rapidly reproduce the traffic. A method like iterative least-square estimate or a Kalman filter should then be applied. For this application of the present invention the ON's and OFF's estimates are used to feed a parametric model estimation system.

Performing this method, it is possible to include traffic which does not describe the end-user call profile. Typically, uplink traffic generates downlink ACK messages which may be misinterpreted as downlink data traffic. This can be eliminated by eliminating all ON periods with a size equal to a TCP ACK packet. Alternatively, these messages can be eliminated by analysing or filtering the traffic. (already mentioned in my additional notes above)

Some TCP segments may be lost, typically during a cell change or because of congestion on the Gi network. This will induce retransmissions and idle times. If there is no TCP-PEP, the idle times can be significant, extending beyond OFF durations. The analysis method assumes that either a TCP-PEP is deployed, or that the minimum TCP required options are deployed. Preferably, at least SACK is employed.

By adjusting the threshold value, it is possible to derive different performance data. If it is desired to characterize the end-user call profile, rather than the actual data traffic on the radio, the OFF period should represent the end-user think time. In the preceding description, the OFF period includes: the transit time of the last group of IP packets on the radio, the browser and terminal reaction time (to construct and display the page on the screen), the end-user reaction time and the transit time of the request for the subsequent GET request. These artefacts can be corrected for in the following variant of the invention:

Assuming TCP traffic, to analyse downlink TCP packets the uplink TCP ACK messages are analysed. The same method as the first algorithm is applied, except that by looking at the ACK segment numbers it is possible to determine the size of the received IP packets. The ACK timestamps allow determination of when the last packet of the ON period has been received. This removes the first uncertainty of the first algorithm in determining the transit time of the last group of downlink IP packets over the air interface. A better estimation of the end-user OFF period is obtained. This alternative algorithm assumes that unencrypted TCP traffic is sent, since it is necessary to inspect header information. Also the processing must take into account the TCP retransmissions, which complicates the analysis but refines its output.

In Figure 1, the trace acquisition unit 110 is shown connecting to the Gn or Gi interface. Connecting at this point in the network has the advantage that IP packets can be easily retrieved with minimal additional processing. However, it can also be connected to the Gb interface, between SGSN and the access network. By decoding the Base Station System GPRS Protocol (BSSGP) layer in which data is encapsulated over Gb, it is possible to associate traffic to the corresponding cell. The analysis of the data traffic can be correlated with cell-related data, such as flow control messages between the Packet Communication Unit (PCU) and SGSN which give a good indication of the flow rate over radio. It is also possible to derive statistics of how much time each user spends per cell. Moving the acquisition unit 110 even closer to the air interface, such as the Abis interface can provide further information specific to the cell. However, a certain amount of upper layer decoding is required because, on this interface, the IP data packets are divided into smaller RLC/MAC packets which are retransmitted in case of radio error.

This invention can be applied to any network. The main difference between networks will be on the selection of appropriate threshold values. The examples are provided with GPRS network and more generally WWAN networks where the round-trip delay is significant. Other networks like WLAN or fixed WANs will have much shorter round-trip times. Then the threshold value will be set accordingly, i.e. to a short time. Other observations will be possible. For instance, on GPRS the round-trip value is important and it is a signature of the deployed equipment and architectures.

The invention is not limited to the embodiments described herein, which may be modified or varied without departing from the scope of the invention.

## Claims

1. A method of analysing data traffic in a telecommunications network in which user terminals perform data sessions, which each comprise an unknown number of data unit downloads, each data unit comprising an unknown number of data packets, each data unit being separated by an unknown time interval , the method comprising:
receiving a trace representative of traffic on the network;
separating from this trace the traffic of each user terminal for each session and for each session:
determining time between packet arrivals in a session;
setting a threshold value representing a time between packet arrivals;
determining 'ON' periods of activity and 'OFF' periods of inactivity and wherein consecutive packets arriving within the threshold value of time are grouped into a common 'ON' period of activity.

2. The method according to claim 1 wherein the telecommunications network is a wireless network.

3. A method according to claim 1 or 2 wherein the threshold value is in the range 0 to 4 seconds.

4. A method according to any one of the preceding claims wherein the threshold value can be set by an operator.

5. A method according to any preceding claim wherein the threshold value is varied by sequentially setting the threshold value to one of a series of predetermined threshold values.

6. A method according to any one of the preceding claims further comprising analysing the traffic using a range of different threshold values.

7. A method according to any one of the preceding claims wherein the step of identifying packets belonging to a particular session comprises inspecting information within the packets.

8. A method according to claim 7 wherein the information is destination address of the packet.

9. A method according to claim 7 or 8 wherein the information is port number.

10. A method according to any one of the preceding claims wherein the trace includes only traffic in one direction of communication.

11. A method according to claim 10, wherein the direction is downlink, further comprising removing downlink traffic which results from uplink traffic.

12. A method according to claim 11 comprising removing downlink traffic in the form of acknowledgement messages (ACK) which result from uplink traffic.

13. A method according to any one of the preceding claims further comprising filtering the results according to the type of data traffic.

14. A method according to any one of the preceding claims further comprising using the results to monitor performance of the network.

15. A method according to any one of the preceding claims further comprising using the results to change a network operating parameter, a hardware element of the network, a cell operating parameter, a cell hardware element.

16. A method according to any one of the preceding claims further comprising using results of the analysis to generate simulated traffic for use in a network simulator.

17. A method according to any one of the preceding claims which is performed substantially in real-time.

18. Software for performing a method of analysing data traffic in a wireless communications network according to any one of the preceding claims.

19. Apparatus for analysing data traffic in a wireless communications network in which users participate in data sessions which each comprise an unknown number of data flows, each flow comprising an unknown number of data packets, the apparatus comprising:
means for receiving a trace representative of the traffic on the network;
means for determining time between packet arrivals in a session;
means for setting a threshold value representing a time between packet arrivals;
means for determining 'ON' periods of activity and 'OFF' periods of inactivity and wherein consecutive packets arriving within the threshold value of time are grouped into a common 'ON' period of activity to thereby assign packets to a particular session.

20. A wireless communications network comprising apparatus for analysing data traffic according to claim 19.
